(19) Europäisches Patentamt
European Patent Office
Office européen des brevets

(11) **EP 2 983 083 B1**

(12) **FASCICULE DE BREVET EUROPEEN**

(45) Date de publication et mention
de la délivrance du brevet:
**12.04.2017 Bulletin 2017/15**

(51) Int Cl.:
**G06F 7/72** *(2006.01)* **H04L 9/00** *(2006.01)*

(21) Numéro de dépôt: **15177904.8**

(22) Date de dépôt: **22.07.2015**

(54) **PROCEDE DE CRYPTOGRAPHIE SUR COURBE ELLIPTIQUE COMPRENANT UNE DETECTION D'ERREUR**

KRYPTOGRAFIE-VERFAHREN AUF EINER ELLIPTISCHEN KURVE, DAS EINE FEHLERERFASSUNG UMFASST

ELLIPTIC CURVE ENCRYPTION METHOD COMPRISING AN ERROR DETECTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.08.2014 FR 1457603**

(43) Date de publication de la demande:
**10.02.2016 Bulletin 2016/06**

(73) Titulaire: **Inside Secure**
**13590 Meyreuil (FR)**

(72) Inventeur: **DUPAQUIS, Vincent**
**13120 BIVER (FR)**

(74) Mandataire: **de Roquemaurel, Bruno et al**
**OMNIPAT**
**24 Place des Martyrs de la Résistance**
**13100 Aix en Provence (FR)**

(56) Documents cités:
**EP-A1- 2 211 265**

• **FAN JUNFENG ET AL: "To Infinity and Beyond: Combined Attack on ECC Using Points of Low Order", 28 septembre 2011 (2011-09-28), GRID AND COOPERATIVE COMPUTING - GCC 2004 : THIRD INTERNATIONAL CONFERENCE, WUHAN, CHINA, OCTOBER 21 - 24, 2004 IN: LECTURE NOTES IN COMPUTER SCIENCE , ISSN 0302-9743 ; VOL. 3251; [LECTURE NOTES IN COMPUTER SCIENCE , ISSN 1611-3349], SPRINGER VERLAG,, XP047309618, ISSN: 0302-9743 ISBN: 978-3-642-24711-8 * section 4 ***
• **MOELLER ET AL: "SECURING ELLIPTIC CURVE POINT MULTIPLICATION AGAINST SIDE-CHANNEL ATTACKS", INFORMATION SECURITY. INTERNATIONAL CONFERENCE: PROCEEDINGS ISC, XX, XX, 1 octobre 2001 (2001-10-01), pages 324-334, XP001068194,**

**Description**

La présente invention concerne la mise en oeuvre d'un procédé de cryptographie sur courbe elliptique dans un dispositif électronique, et en particulier la détection d'une attaque durant l'exécution de calculs cryptographiques par un tel dispositif.

Divers procédés de cryptographie connus, basés sur les courbes elliptiques reposent sur l'opération de multiplication scalaire, qui a pour expression mathématique : $k \otimes P = P \oplus P \oplus ... \oplus + P$ (k fois), P étant un point choisi sur une courbe elliptique, k étant un nombre entier, et "$\oplus$" étant l'opérateur d'addition appliqué à des points de la courbe elliptique. Le nombre k peut être utilisé par exemple comme une clé privée et le point $k \otimes P$ résultant de cette opération, ou l'une des coordonnées affines de ce point, peut être utilisé comme une clé publique correspondant à la clé privée k. En effet, connaissant le résultat $k \otimes P$ et les coordonnées du point P, il peut être extrêmement difficile de trouver la valeur du nombre k, notamment en choisissant le nombre k et les coordonnées du point P suffisamment grands. Cette opération est utilisée par exemple lors d'un calcul de signature, ou pour générer une clé de cryptographie, ou encore pour chiffrer un message. Cette opération est mise en oeuvre par divers algorithmes de cryptographie basés sur les courbes elliptiques, tels que l'algorithme ECDSA ("Elliptic Curve Digital Signature Algorithm"), ECDH (Elliptic Curve Diffie-Hellman), ECIES (Elliptic Curve Integrated Encryption Scheme).

Les opérations entre points d'une courbe elliptique se ramènent à des opérations sur les coordonnées de ces points dans des corps de Galois de la forme $GF(q^m)$, $q^m$ définissant le corps, q étant un nombre premier, et m étant un nombre entier. En cryptographie basée sur les courbes elliptiques, soit q est choisi égal à un grand nombre premier p et m est choisi égal à 1, soit q est choisi égal à 2 et m est un grand nombre entier. L'opération de multiplication scalaire est généralement décomposée en plusieurs itérations comportant chacune des opérations d'addition et de doublement de points. Certains algorithmes de multiplication scalaire comprennent pour chaque itération, c'est-à-dire chaque bit du nombre scalaire, une addition de deux points identiques de la courbe elliptique, et si le bit du scalaire traité par l'itération est égal à 1, une addition du point R avec un autre point P de la courbe elliptique. Il est généralement fait appel à des fonctions différentes pour exécuter chacune de ces opérations, l'addition de deux points identiques étant exécutée au moyen d'une fonction de doublement, tandis que l'addition de deux points différents est exécutée au moyen d'une fonction d'addition. Cette distinction est due au fait que les formules de calcul de la fonction d'addition ne sont généralement pas applicables si les points à additionner sont identiques. En effet, dans certains systèmes de coordonnées, l'addition de deux points identiques peut conduire à une division par zéro.

Dans un dispositif électronique de type carte à puce, les calculs cryptographiques ou une partie de ces calculs sont généralement exécutés par un processeur spécifique, tel un coprocesseur arithmétique ou un crypto-processeur. La multiplication d'un point par un nombre scalaire "$k \otimes P$", et plus particulièrement l'exécution d'additions et de doublement de points d'une courbe elliptique, occupe la majeure partie du temps de calcul du processeur relativement au temps total de génération d'une clé, de calcul d'une signature, de vérification de signature, ou d'une opération de chiffrement ou de déchiffrement. La cryptographie sur courbe elliptique est vulnérable à certaines attaques, notamment celles consistant à provoquer des fautes dans un circuit intégré durant l'exécution de calculs cryptographiques, en vue de découvrir des données secrètes telles que des clés cryptographiques.

Il est donc souhaitable de protéger contre de telles attaques un dispositif électronique effectuant des calculs cryptographiques sur courbe elliptique. Il est également souhaitable de pouvoir réaliser une telle détection aussi tôt que possible durant l'exécution d'un calcul cryptographique. En effet, la simple exécution d'un calcul cryptographique sur des données erronées peut révéler une partie d'une donnée secrète. Par conséquent, il peut être inefficace de détecter une injection de faute seulement à la fin d'un calcul.

Des modes de réalisation concernent un procédé de calcul cryptographique dans un système cryptographique sur courbe elliptique, le procédé étant exécuté par un dispositif électronique et comprenant une opération de multiplication d'un point d'une courbe elliptique par un nombre scalaire, le point présentant des coordonnées affines appartenant à un corps de Galois. Selon un mode de réalisation, le procédé comprend des étapes consistant à : détecter l'apparition d'un point à l'infini durant des calculs intermédiaires de l'opération de multiplication, et activer un signal d'erreur si le point à l'infini est détecté et si le nombre de bits du nombre scalaire traités par l'opération de multiplication est inférieur au rang du bit de poids fort d'un ordre d'un point de base du système cryptographique.

Selon un mode de réalisation, le procédé comprend une étape d'activation du signal d'erreur si le point à l'infini a été détecté en entrée d'un calcul intermédiaire de l'opération de multiplication, si une opération d'addition et/ou de doublement de point a été exécutée, et si le nombre de bits traités du nombre scalaire est inférieur au rang du bit de poids fort de l'ordre du point de base.

Selon un mode de réalisation, le calcul intermédiaire comprend une addition de points de la courbe elliptique.

Selon un mode de réalisation, le calcul intermédiaire comprend une opération de doublement d'un point de la courbe elliptique.

Selon un mode de réalisation, le procédé comprend des étapes d'activation d'un mode de détection d'erreur seulement lorsque le nombre de bits traités du nombre scalaire est inférieur au rang du bit de poids fort de l'ordre du point de base, le signal d'erreur ne pouvant être activé que lorsque le mode de détection d'erreur est activé.

Selon un mode de réalisation, le procédé comprend une étape de détection de l'apparition du point à l'infini avant et/ou après une opération d'addition de points, et/ou avant et/ou après une opération de doublement de point.

Selon un mode de réalisation, le procédé comprend une étape d'utilisation en tant que point résultant du calcul intermédiaire, d'un point ayant une valeur arbitraire, lorsque le signal d'erreur est actif.

Selon un mode de réalisation, le procédé comprend une étape d'attribution d'une valeur arbitraire au nombre scalaire, lorsque le signal d'erreur est actif.

Des modes de réalisation concernent également un dispositif électronique comprenant un processeur configuré pour la mise en oeuvre du procédé défini précédemment.

Selon un mode de réalisation, le dispositif comprend un bloc de calcul d'addition de points d'une courbe elliptique et un bloc de calcul de doublement d'un point de la courbe elliptique.

Selon un mode de réalisation, le bloc de calcul d'addition et/ou le bloc de calcul de doublement sont configurés pour détecter l'apparition du point à l'infini, et pour activer un signal d'erreur si un mode de détection d'erreur est activé.

Selon un mode de réalisation, le dispositif est configuré pour détecter l'apparition du point à l'infini et pour activer un signal d'erreur, si un mode de détection d'erreur est activé, avant et/ou après l'activation du bloc de calcul d'addition pour effectuer une opération d'addition, et/ou avant et/ou après l'activation du bloc de calcul de doublement pour effectuer une opération de doublement.

Des exemples de réalisation de l'invention seront décrits dans ce qui suit, à titre non limitatif en relation avec les figures jointes parmi lesquelles :

la figure 1 représente schématiquement un dispositif électronique comprenant un circuit de calcul cryptographique sur courbe elliptique, selon un mode de réalisation,
la figure 2 représente des étapes d'une fonction de multiplication d'un point d'une courbe elliptique par un nombre scalaire, selon un mode de réalisation,
la figure 3 représente des étapes d'une fonction d'addition de deux points d'une courbe elliptique, intégrant une protection contre les injections de faute, selon un mode de réalisation,
la figure 4 représente des étapes d'une fonctions de doublement d'un point d'une courbe elliptique, intégrant une protection contre les injections de faute, selon un mode de réalisation,
la figure 5 représente des étapes d'une procédure de traitement d'erreur, selon un mode de réalisation,
les figures 6 et 7 représente des étapes de fonctions de multiplication d'un point d'une courbe elliptique par un nombre scalaire, selon d'autres modes de réalisation.

Un système cryptographique sur courbe elliptique requiert généralement la définition de paramètres dits de "domaine". Dans le cas d'un corps de Galois de type GF(p) ou GF($2^m$), ces paramètres comprennent un grand nombre premier p ou un grand nombre entier m, un point générateur ou point de base G, de coordonnées Gx, Gy dans le corps de Galois, un nombre premier n appelé "ordre" du point G, tel que n·G = Ø, Ø étant le point à l'infini ou l'élément neutre du corps de Galois, des paramètres définissant une courbe elliptique, un nombre f appelé "cofacteur", généralement égal à 1, 2 ou 4, tel que f·n représente le nombre de points de la courbe elliptique. Dans un corps de Galois de type GF(p), la courbe elliptique peut par exemple avoir pour équation E(a,b) : $y^2 = x^3 + ax + b$. Dans une telle courbe elliptique, l'opposé d'un point P de coordonnées affines (x, y) et le point -P de coordonnées (x, -y).

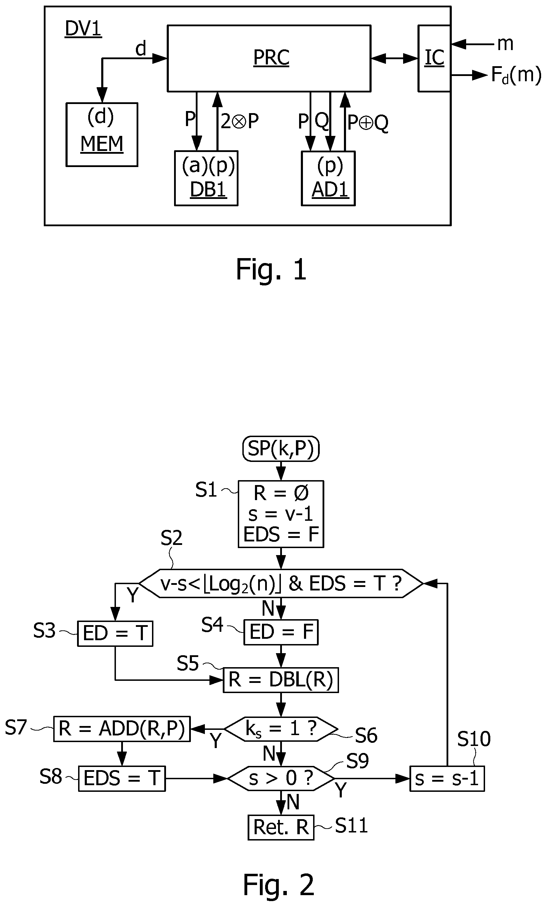

La figure 1 représente sous forme de schéma bloc un dispositif électronique DV1 configuré pour exécuter des calculs cryptographiques incluant des produits de points d'une courbe elliptique par un nombre scalaire, appliqués à des nombres de grande taille. Le dispositif DV1 peut être un circuit intégré sur microplaquette de semi-conducteur agencé sur un support portatif comme une carte en matière plastique, l'ensemble formant une carte à puce. Le dispositif DV1 peut également être n'importe quel appareil équipé d'un processeur multi-tâche, tel qu'un téléphone mobile intelligent ("smartphone"), un lecteur multimédia, une tablette tactile, ou un ordinateur personnel. Le dispositif DV1 peut également être un composant d'un tel appareil, par exemple relié à un processeur principal de l'appareil.

Le dispositif DV1 comprend un processeur PRC, un bloc de calcul AD1 configuré pour exécuter une addition de points P et Q appartenant à une courbe elliptique et dont les coordonnées affines appartiennent au corps de Galois, un bloc de calcul DB1 configuré pour exécuter un doublement d'un point P appartenant à la courbe elliptique, une mémoire MEM et un circuit d'interface de communication IC. Les blocs de calcul AD1, DB1 disposent du paramètre p du système cryptographique, le bloc DB1 dispose en outre du paramètre a définissant la courbe elliptique du système cryptographique. Les blocs de calcul AD1, DB1 peuvent comprendre chacun un coprocesseur équipé d'une unité centrale programmable, ou un coprocesseur entièrement hardware de type machine d'état. Les blocs de calculs AD1, DB1 peuvent simplement correspondre à une fonction appelée par un programme principal exécuté notamment par le processeur PRC. Les deux blocs de calcul AD1, DB1 peuvent également être intégrés dans un même composant (coprocesseur ou machine d'état). Le circuit d'interface IC peut être du type à contact ou sans contact, par exemple un circuit d'interface RF ou UHF fonctionnant par couplage inductif ou par couplage électrique.

De façon en soi classique, une variable est dite "de grande taille" lorsque sa taille (en nombre de bits) est supérieure à celle des registres de calcul du processeur PRC. Ce dernier effectue lui-même, sans faire appel aux blocs de calcul AD1, DB1, des opérations de nombres de taille inférieure ou égale à celle de ses registres de calcul, et fait appel aux blocs de calcul AD1, DB1 pour effectuer des opérations d'addition et de doublement portant sur des points de courbe elliptique présentant des coordonnées de grande taille. Par exemple, si la taille des registres de calcul du processeur PRC est de 32 bits, une variable de grande taille est une variable de plus de 32 bits. En cryptographie basée sur les courbes elliptiques, les variables manipulées (coordonnées des points de courbes elliptiques, paramètres p - module, b, Gx, Gy - coordonnées du point de base G, n - ordre du point de base) peuvent atteindre plusieurs centaines de bits (typiquement par exemple 160, 192, 224, 256, 320, 384, 521 bits).

La mémoire MEM est couplée au processeur PRC et permet au dispositif DV1 de mémoriser une clé secrète k. Le processeur PRC reçoit, par l'intermédiaire du circuit d'interface IC, un message m à chiffrer, à déchiffrer, ou à signer, ou bien une signature à vérifier, et renvoie un message chiffré ou déchiffré, ou une signature, du type $F_k(m)$, $F_k$ étant une fonction de cryptographie basée sur la clé k, comprenant un calcul de multiplication scalaire exécuté par le processeur PRC. Pendant le calcul de multiplication scalaire, le processeur PRC fait appel aux blocs de calcul AD1, DB1, en fournissant des points P, Q au bloc de calcul AD1 qui retourne la somme $P \oplus Q$, et en fournissant un point P au bloc de calcul DB1 qui retourne le double $2 \otimes P$.

Dans la courbe elliptique E(a,b) ayant pour équation $y^2 = x^3 + ax + b$ sur un corps de Galois de type GF(p), la somme de deux points P1(x1,y1) et P2(x2,y2) fournit un point P3(x3,y3) = P1 $\oplus$ P2 qui peut être calculé par l'équation suivante :

$$\left|\begin{array}{l} x3 = m1^2 - x1 - x2 \\ y3 = m1(x1 - x3) - y1, \end{array}\right. \quad \text{avec :} \quad m1 = (y2 - y1)/(x2 - x1) \quad (1)$$

L'équation (1) est utilisable si le point P2 est différent des points P1 et -P1. Ainsi, l'équation (1) ne peut pas s'appliquer si les points à additionner sont identiques ou opposés. Le double d'un point P(x,y) fournit un point P4(x4, y4) = 2 $\otimes$ P qui peut être calculé par l'équation suivante :

$$\left|\begin{array}{l} x4 = m2^2 - 2x \\ y4 = m2(x - x4) - y, \end{array}\right. \quad \text{avec :} \quad m2 = (3x^2 + a)/2y \quad (2)$$

dans laquelle le nombre y est différent de zéro.

Il peut être observé que le calcul des nombres m1 et m2 dans les opérations d'addition et de doublement requiert un calcul d'inversion. Un tel calcul d'inversion nécessite un temps de calcul correspondant à celui de plusieurs dizaines de multiplications. Il est possible de supprimer le calcul d'inversion par une sélection appropriée d'une représentation des points d'une courbe elliptique. A cet effet, il est connu d'utiliser une représentation en coordonnées projectives, telle que la représentation en coordonnées projectives homogènes ou jacobiennes. La représentation en coordonnées projectives homogènes consiste à remplacer les coordonnées affines (x, y) par les coordonnées projectives homogènes (X, Y, Z) telles que X = x·Z, Y=y·Z, Z étant différent de 0. L'équation de la courbe elliptique E(a,b) devient alors : $Y^2Z = X^3 + aXZ^2 + bZ^3$. Inversement, il est possible de revenir aux coordonnées affines d'un point en remplaçant les coordonnées projectives homogènes par les coordonnées (x=X/Z,y=Y/Z), Z étant différent de zéro. Le passage des coordonnées affines aux coordonnées projectives peut être effectué simplement en choisissant Z égal à 1. A noter que le point à l'infini Ø présente lune coordonnée Z nulle en coordonnées projectives homogènes ou jacobiennes. La représentation en coordonnées projectives jacobiennes consiste à changer les coordonnées affines (x, y) en coordonnées de la forme (X=x·Z², Y=y·Z³,Z), Z pouvant être choisi égal à 1 ou toute autre valeur non nulle du corps GF(p). L'équation de la courbe elliptique E(a,b) devient alors : $Y^2 = X^3 + aXZ^4 + bZ^6$.

La somme de deux points P1 (X1,Y1,Z1) et P2(X2,Y2,Z2) de la courbe E(a,b), en coordonnées projectives homogènes fournit un point P3(X3,Y3,Z3) tel que :

$$\left|\begin{array}{l} X3 = B \cdot C \\ Y3 = A \cdot (B^2 \cdot X1 \cdot Z2 - C) - B^3 \cdot Y1 \cdot Z2 \\ Z3 = B^3 \cdot Z1 \cdot Z2 \end{array}\right. \quad \text{avec :} \quad \left|\begin{array}{l} A = Y2 \cdot Z1 - Y1 \cdot Z2 \\ B = X2 \cdot Z1 - X1 \cdot Z2 \\ C = A^2 \cdot Z1 \cdot Z2 - B^3 - 2 \cdot B^2 \cdot X1 \cdot Z2 \end{array}\right. \quad (3)$$

Dans l'équation (3), le point P2 est différent des points P1 et -P1, et les nombres Z1 et Z2 sont différents de 0 (P1 et P2 sont différents du point à l'infini Ø). Le doublement d'un point P(X,Y,Z) de la courbe E(a,b), en coordonnées projectives homogènes fournit un point P4(X4,Y4,Z4) tel que :

$$\left|\begin{array}{l} X4 = B{\cdot}E \\ Y4 = A{\cdot}(D-E) - 2{\cdot}C^2 \\ Z4 = B^3 \end{array}\right. \quad \text{avec :} \quad \left|\begin{array}{l} A = 3{\cdot}X^2 + a{\cdot}Z^2 \\ B = 2{\cdot}Y{\cdot}Z \\ C = B{\cdot}Y \\ D = 2{\cdot}C{\cdot}X \\ E = A^2 - 2{\cdot}D \end{array}\right. \quad (4)$$

Dans l'équation (4), le nombre Y est différent de zéro.

Les opérations des équations (1) à (4) sont effectuées dans le corps de Galois GF(p) modulo p. Il peut être observé que les équations (3) et (4) ne comportent pas d'opérations d'inversion. Selon un mode de réalisation, le bloc de calcul AD1 peut mettre en oeuvre l'équation (1) ou (3), et le bloc de calcul DB1 peut mettre en oeuvre l'équation (2) ou (4).

La figure 2 représente un exemple de fonction SP de multiplication d'un point d'une courbe elliptique par un nombre scalaire, exécutée par le dispositif DV1. La fonction SP reçoit en paramètres d'entrée un point P et un nombre scalaire k et fourni le résultat de la multiplication scalaire k $\otimes$ P. Le nombre scalaire k est représenté sous forme binaire par une succession d'un nombre v de bits. La procédure SP comprend une itération de calcul par bit du nombre scalaire k. La procédure SP comprend des étapes S1 à S11. Les étapes S1 et S2 sont exécutées successivement à l'activation de la procédure SP. A l'étape S1, une variable R pouvant recevoir les cordonnées d'un point est initialisée aux coordonnées du point à l'infini Ø en coordonnées projectives homogènes. Un indice de boucle s est également initialisé à la valeur v-1 du rang du bit de poids fort du nombre scalaire k, et un drapeau EDS est initialisé à faux. L'étape S2 consiste en un test d'activation d'un mode de détection d'erreur. Selon un mode de réalisation, il est considéré que le point à l'infini Ø ne peut pas apparaître durant un calcul intermédiaire d'un calcul de multiplication d'un point de courbe elliptique par un scalaire, tant que le nombre de bits traités du nombre scalaire k est inférieur au rang du bit de poids fort de l'ordre n du point de base G du système cryptographique. Si le point à l'infini Ø apparaît dans ces conditions à l'issue d'un traitement intermédiaire, cela signifie qu'une erreur s'est produite, cette erreur pouvant être due à une attaque du dispositif DV1. Ainsi, à l'étape S2, le nombre de bits traités, du nombre scalaire k, égal à v-s, est comparé au rang du bit de poids fort de l'ordre n du point G, soit la grandeur $\lfloor Log_2(n) \rfloor$, dans laquelle $\lfloor x \rfloor$ représente la partie entière du nombre x. Si le nombre de bits traités v-s est inférieur à la grandeur $\lfloor Log_2(n) \rfloor$ et si le drapeau EDS est abaissé (EDS = F), les étapes S3, S5 et S6 sont exécutées, sinon les étapes S4, S5 et S6 sont exécutées. A l'étape S3, le mode de détection d'erreur est activé par exemple par la levée d'un drapeau ED (ED = T). A l'étape S4, le mode de détection d'erreur est désactivé par exemple par l'abaissement du drapeau ED (ED = F). A l'étape S5, une fonction de doublement de point DBL est appelée avec la variable R passée en paramètre d'appel de la fonction, et retournant la variable R contenant le résultat du doublement. A l'étape S6, le bit $k_s$ de rang s du nombre scalaire k est comparé à 1. Si le bit $k_s$ est égal à 1, les étapes S7, S8 et S9 sont exécutées, sinon seule l'étape S9 est exécutée. A l'étape S7, une fonction d'addition de points ADD est appelée pour additionner le point P avec le point contenu dans la variable R. La fonction ADD retourne le résultat de l'addition de points dans la variable R. A l'étape S8, le drapeau EDS est levé (EDS = T). A l'étape S9, la fin du calcul de multiplication scalaire est testée. Ainsi, si l'indice s n'est pas égal à 0, l'étape S10 est exécutée pour décrémenter de 1 l'indice de boucle et une nouvelle itération du calcul de multiplication scalaire est exécutée à partir de l'étape S2. Si l'indice s est égal à 0, l'exécution de la procédure SP prend fin à l'étape S11 où la variable R contenant le résultat du calcul de multiplication scalaire est fournie en sortie de la procédure SP. Le drapeau EDS permet d'éviter de déclencher un mode d'erreur au début du traitement de multiplication scalaire par la détection d'un point à l'infini durant le traitement. En effet, au début du traitement, la variable R contient la valeur du point à l'infini Ø tant qu'un bit $k_s$ à un n'a pas été traité.

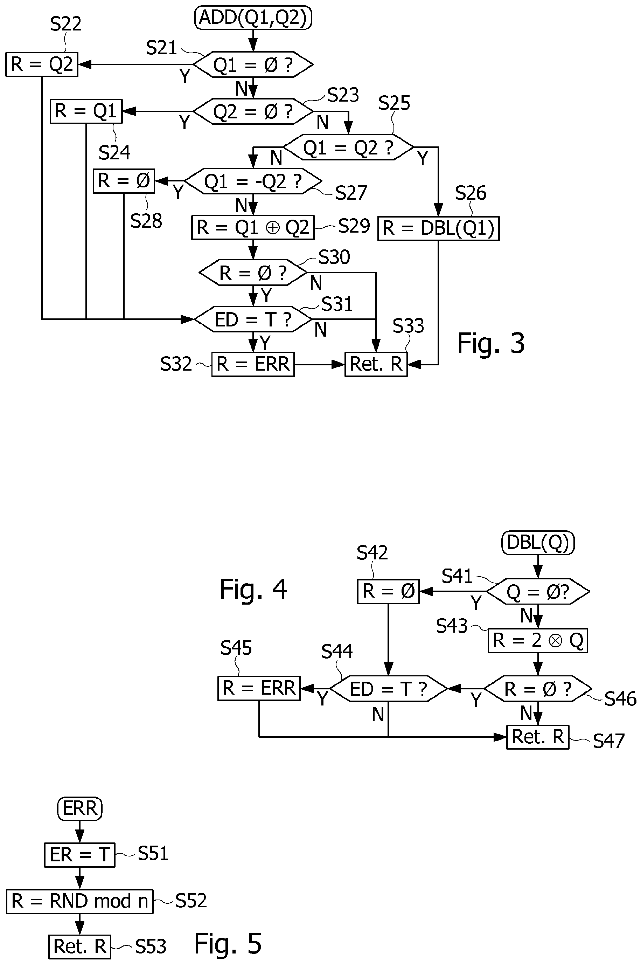

La figure 3 représente des étapes de la fonction d'addition de point ADD. La fonction ADD reçoit en paramètres d'entrée des points Q1 et Q2 à additionner et fournit le résultat de l'addition Q1 $\oplus$ Q2. La fonction ADD comprend des étapes S21 à S33. L'étape S21 exécutée à l'activation de la fonction ADD, consiste à comparer les points Q1 et à l'infini Ø. Si le point Q1 est égal au point à l'infini Ø, les étapes S22 et S31 sont exécutées, sinon l'étape S23 est exécutée. A l'étape S22, la variable R recevant le point résultant de l'addition, reçoit le point Q2. A l'étape S23, les points Q2 et à l'infini Ø sont comparés. Si le point Q2 est égal au point à l'infini Ø, les étapes S24 et S31 sont exécutées, sinon l'étape S25 est exécutée. A l'étape S24, la variable R reçoit la valeur du point Q1. A l'étape S25, les points Q1 et Q2 sont comparés. Si les points Q1 et Q2 sont égaux, les étapes S26 et S33 sont exécutées, sinon l'étape S27 est exécutée. A l'étape S26, la fonction de doublement de point DBL est appelée avec en paramètre le point Q1. A l'étape S27, les points Q1 et -Q2 sont comparés. Si les points Q1 et Q2 sont opposés, les étapes S28 et S31 sont exécutées, sinon les étapes S29 et S30 sont exécutées. A l'étape S28, la variable R reçoit la valeur du point à l'infini 0. A l'étape S29, les points Q1 et Q2 sont additionnés, par exemple en appliquant les équations (1) ou (3), et la variable R reçoit le résultat de l'addition Q1 ⊕ Q2. A l'étape S30, le point R est comparé au point à l'infini Ø. Si le point R est égal au point à l'infini Ø, l'étape S31 est exécutée, sinon l'étape S33 est exécutée. A l'étape S31, l'indicateur de mode de détection d'erreur ED est testé, et s'il est actif les étapes S32 et S33 sont exécutées, sinon seule l'étape S33 est exécutée. L'étape S32 consiste en un appel à une procédure d'erreur ERR qui peut retourner la valeur d'un point chargée dans la variable R. L'exécution de la fonction ADD prend fin à l'étape S33 où la variable R est fournie par la fonction ADD.

Il est à noter qu'en coordonnées projectives, les étapes S27 et S28 peuvent être supprimées, le calcul d'addition effectué à l'étape S29 conduisant à un point R égal au point à l'infini si les points Q1 et Q2 sont opposés. L'étape S30 peut également être supprimée sachant que la comparaison avec le point à l'infini réalisée à cette étape sera effectuée à l'étape S21 ou S23 lors de l'itération en cours ou suivante du calcul de multiplication d'un point par un nombre scalaire (figure 2). La figure 4 représente des étapes de la fonction de doublement de point DBL, selon un mode de réalisation. La fonction DBL reçoit en paramètre d'entrée, un point Q à doubler et fournit le résultat de l'opération 2 ⊗ Q. La fonction DBL comprend des étapes S41 à S47. A l'étape S41, le point Q passé en paramètre de la fonction DBL est comparé au point à l'infini. Si le point Q est égal au point à l'infini Ø, les étapes S42 et S45 sont exécutées, sinon les étapes S43 et S44 sont exécutées. A l'étape S42, une variable (ou un registre) R reçoit les coordonnées du point à l'infini Ø. L'étape S43 consiste en l'opération de doublement du point Q dont les coordonnées du point résultant sont mémorisées par la variable R. Cette opération peut être effectuée par exemple en appliquant les équations (2) ou (4). A l'étape S44, la variable R est comparée au point à l'infini Ø. Si la variable R mémorise les coordonnées du point à l'infini Ø, l'étape S45 est exécutée, sinon l'étape S47 est exécutée. L'étape S45 consiste à tester si le mode de détection d'erreur est activé (ED = T). Si le mode de détection d'erreur est activé, les étapes S46 et S47 sont exécutées, sinon seule l'étape S47 est exécutée. L'étape S46 consiste en un appel à une procédure d'erreur ERR qui peut retourner la valeur d'un point attribuée à la variable R. L'exécution de la fonction DBL prend fin à l'étape S47 où la variable R est fournie en sortie de la fonction DBL.

Il est à noter qu'en coordonnées projectives, les étapes S41 et S42 peuvent être supprimées, le calcul de doublement effectué à l'étape S43 conduisant à un point R égal au point à l'infini si le point Q est égal au point à l'infini. Les étapes S44, S45 et S46 peuvent également être supprimées sachant que la comparaison avec le point à l'infini réalisée à l'étape S46 sera effectuée à l'étape S21 ou S23 lors de l'itération en cours ou suivante du calcul de multiplication d'un point par un nombre scalaire (figure 2).

Selon un autre mode de réalisation, les blocs de calcul AD1 et DB1 mettent en oeuvre respectivement les fonctions ADD et DBL, la fonction ERR étant mise en oeuvre dans l'un et/ou l'autre des blocs de calcul AD1, DBL. Les blocs de calcul AD1, DB1 reçoivent alors en outre l'indicateur ED du processeur PRC.

La figure 5 représente un exemple de la procédure ERR. La procédure ERR comprend des étapes S51 à S53 qui sont exécutées successivement. A l'étape S51, un indicateur d'erreur ER est activé. L'activation de l'indicateur ER peut ensuite être exploitée par le processeur PRC pour prendre toute mesure appropriée pour traiter l'erreur ainsi détectée par l'une ou l'autre des fonctions ADD et DBL. A l'étape S52, les coordonnées d'un point R sont choisies aléatoirement. A l'étape S53, la valeur du point R est fournie en sortie de la procédure ERR. A noter qu'à l'étape S52, la valeur du point R peut être définie d'autres manières, par exemple sélectionnée de manière arbitraire parmi une ou plusieurs valeurs mémorisées dans une table, ou extraite d'un registre utilisé lors d'un calcul intermédiaire précédent.

Tant que la détection est active (ED=T), une détection d'erreur est effectuée avant et/ou après chaque calcul élémentaire d'addition et/ou de doublement de point d'un calcul de multiplication d'un point par un nombre scalaire. Cette disposition permet d'éviter qu'une injection d'erreur puisse être exploitée pour découvrir des données secrètes en analysant le résultat fourni par le calcul de multiplication scalaire.

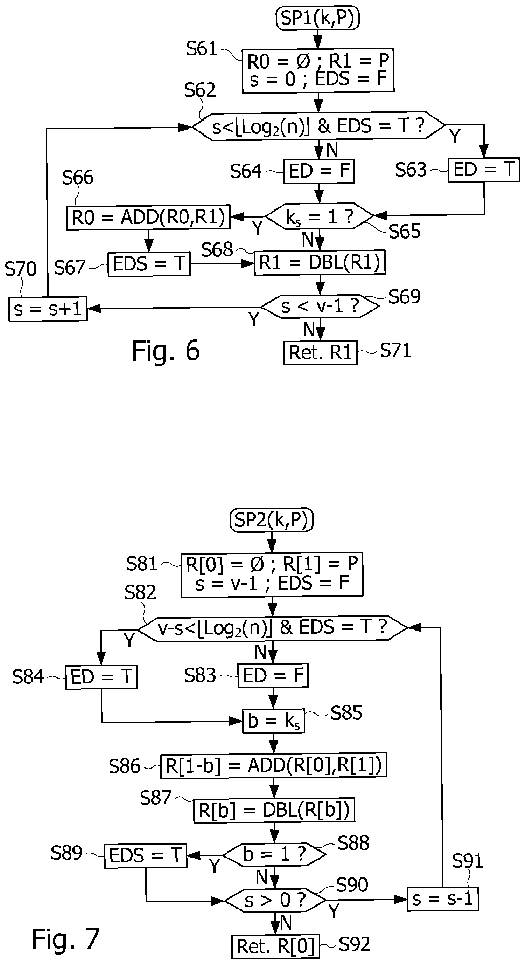

La figure 6 représente un autre exemple SP1 de fonction de multiplication d'un point P de courbe elliptique par un nombre scalaire k, exécutée par le dispositif DV1, selon un autre mode de réalisation. La fonction SP reçoit en paramètres d'entrée un point P et un nombre scalaire k et fourni le résultat de la multiplication scalaire k ⊗ P. Ici encore, le nombre scalaire k est représenté sous la forme d'une succession d'un nombre v de bits. La procédure SP1 comprend une itération de calcul par bit du nombre scalaire k. La procédure SP1 comprend des étapes S61 à S71. Les étapes S61 et S62 sont exécutées successivement à l'activation de la procédure SP1. A l'étape S61, des variables R0, R1 reçoivent respectivement les coordonnées du point à l'infini Ø et du point P passé en paramètre d'appel de la procédure SP1. Un indice de boucle s est également initialisé à zéro, et un drapeau EDS est initialisé à faux. L'indice s correspond donc au rang du bit de poids faible du nombre scalaire k. L'étape S62 consiste en un test d'activation du mode de détection d'erreur. Comme pour la fonction SP, ce test consiste à comparer l'indice de boucle s, c'est-à-dire le nombre de bits traités du nombre scalaire, à la grandeur ⌊$Log_2(n)$⌋ correspondant au nombre de bits de l'ordre n du point de base G ou au rang du bit de poids fort de l'ordre n. Si le nombre de bits traités s est inférieur à la grandeur ⌊$Log_2(n)$⌋ et si le drapeau EDS est levé, les étapes S63 et S65 sont exécutées, sinon les étapes S64 et S65 sont exécutées. A l'étape S63, le mode de détection d'erreur est activé en levant le drapeau ED (ED = T). A l'étape S64, le mode de détection d'erreur est désactivé en abaissant le drapeau ED (ED = F). A l'étape S65, le bit $k_s$ de rang s du nombre scalaire k est comparé à 1. Si le bit $k_s$ est égal à 1, les étapes S66 à S69 sont exécutées, sinon seules les étapes S68 et S69 sont exécutées. A l'étape S66, la variable R0 reçoit le résultat de l'addition des points mémorisés par les variables R0 et R1, fourni par la fonction d'addition de point ADD. A l'étape S67, le drapeau EDS est levé (EDS = T). A l'étape S68, la fonction de doublement de point DBL est appelée pour calculer le double du point mémorisé par la variable R1, et le point résultant du doublement est chargé dans la variable R1. A l'étape S69, la fin du calcul de multiplication scalaire est testée. Si tous les bits du nombre scalaire k n'ont pas été traités (indice s inférieur à v-1), l'étape S70 est exécutée pour incrémenter de 1 l'indice s de boucle et une nouvelle itération du calcul de multiplication scalaire est effectuée à partir de l'étape S62. Si l'indice s est égal à v-1, l'exécution de la procédure SP1 prend fin à l'étape S71 où la variable R0 contenant le point résultant du calcul de multiplication scalaire est fournie en sortie de la procédure SP1.

La figure 7 représente un autre exemple SP2 de fonction de multiplication d'un point P de courbe elliptique par un nombre scalaire k, exécutée par le dispositif DV1, selon un autre mode de réalisation. Ici encore, le nombre scalaire k est représenté sous la forme d'une succession d'un nombre v de bits. La fonction SP2 qui se base sur l'algorithme de "Montgomery Ladder", comprend une itération de calcul par bit du nombre scalaire k. La fonction SP2 comprend des étapes S81 à S91. Les étapes S81 et S82 sont exécutées successivement à l'activation de la fonction SP2. A l'étape S81, deux variables R[0], R[1] d'un tableau R pouvant recevoir chacune les cordonnées d'un point, reçoivent respectivement les coordonnées du point à l'infini 0 et du point P passé en paramètre d'appel de la procédure SP1. Un indice de boucle s est également initialisé à v-1 correspondant au rang du bit de poids fort du nombre scalaire k, et un drapeau EDS est initialisé à faux. A (EDS = F), l'étape S82, le test d'activation du mode de détection d'erreur est exécuté. Comme précédemment, ce test consiste à comparer le nombre de bits traités v-s du nombre scalaire k à la grandeur $\lfloor Log_2(n) \rfloor$ et à tester le drapeau EDS. Si le nombre de bits traités v-s est inférieur à la grandeur $\lfloor Log_2(n) \rfloor$ et si le drapeau EDS est levé, les étapes S84 à S88 sont exécutées, sinon les étapes S83 et S85 à S88 sont exécutées. A l'étape S83, le mode de détection d'erreur est désactivé par l'abaissement du drapeau ED (ED = F). A l'étape S84, le mode de détection d'erreur est activé en levant le drapeau ED (ED = T). A l'étape S85, une variable binaire b reçoit la valeur du bit $k_s$ de rang s du nombre scalaire k. A l'étape S86, la variable R[1-b] (variable R[0] ou R[1] selon la valeur de la variable b) reçoit la somme des points mémorisés par les variables R[0] et R[1] et fournie par la fonction d'addition de point ADD. A l'étape S87, la fonction de doublement de point DBL est appelée pour calculer le double du point mémorisé par la variable R[b] (variable R[0] ou R[1] selon la valeur de la variable b), et le point résultant du doublement est chargé dans la variable R[b]. A l'étape S88, la valeur de la variable b est testée pour lever le drapeau EDS si la variable b est à 1 (étape S89). A l'étape S90 exécutée à la suite de l'étape S88 ou S89, la fin du calcul de multiplication scalaire est testée. Ainsi, si l'indice s est supérieur à zéro, l'étape S91 est exécutée pour décrémenter de 1 l'indice s de boucle et une nouvelle itération du calcul de multiplication scalaire est effectuée à partir de l'étape S82. Si l'indice s est égal à zéro, l'exécution de la procédure SP2 prend fin à l'étape S92 où la variable R[0] contenant le point résultant du calcul de multiplication scalaire est fournie en sortie de la procédure SP2.

Il est à noter que selon l'algorithme employé pour calculer le produit d'un point par un nombre scalaire, certaines étapes de comparaison effectuées par la fonction d'addition ADD (figure 3) peuvent être inutiles car le cas testé ne peut pas se produire. Ainsi, les étapes S25 à S28 peuvent être supprimées, notamment dans le cas où la procédure de multiplication SP2 (figure 7) est utilisée.

Plus généralement, selon le type du corps de Galois, GF(p) ou GF($2^m$), selon le système de coordonnées employé, et le cas échéant le type de coordonnées projectives, selon l'algorithme de multiplication par un nombre scalaire utilisé, et selon la forme de l'équation de la courbe elliptique, la détection de l'apparition du point à l'infini lors de l'exécution des opérations d'addition et de doublement, peut être effectuée uniquement sur les opérandes Q1, Q2 de l'opération d'addition (étapes S21 et S23), ou bien uniquement sur l'opérande de l'opération de doublement (étape S41), ou bien uniquement sur le résultat de l'opération d'addition (étape S30), ou bien uniquement sur le résultat de l'opération de doublement (étape S46).

Par ailleurs, au lieu de modifier le point résultant R fourni par les opérations d'addition et de doublement, ces opérations peuvent retourner le point à l'infini, et la détection de l'apparition du point à l'infini peut être effectuée dans les fonctions de multiplication par un nombre scalaire des figures 2, 6 et 7, à la suite de chaque appel de l'opération d'addition (étapes S7, S66, S86) et/ou de l'opération de doublement (étapes S5, S68, S87). Si, le point résultant R fourni par l'opération d'addition ou de doublement) est égal au point à l'infini et si le drapeau ED est activé (ED = T), la fonction de multiplication SP, SP1, SP2 peut activer un indicateur d'erreur qui est fourni en sortie de la fonction, et/ou modifier le point résultant R, et/ou modifier le nombre scalaire k.

L'une ou l'autre des procédures SP, SP1, SP2 peut être mise en oeuvre par exemple dans un algorithme de signature numérique à clé publique de type ECDSA, exécuté par le dispositif DV1. L'algorithme ECDSA qui est mis en oeuvre dans un corps de Galois de type GF(p) ou GF($2^m$), consiste à générer une paire de clés publique Q et privée r. La clé privée r est un nombre scalaire qui peut être choisi aléatoirement supérieur à 1 et inférieur ou égal à n-1, n étant l'ordre du point de base G des paramètres de domaine du système cryptographique. La clé publique Q est choisie égale à r ⊗ G, G étant le point générateur des paramètres de domaine du système cryptographique. La clé Q peut donc être calculée à l'aide d'une des fonctions SP, SP1, SP2. Pour signer un message m, le dispositif DV1 génère de manière aléatoire un nombre k supérieur à 1 et inférieur ou égal à n-1. Le dispositif DV1 calcule ensuite les coordonnées du point P(i,j) = k ⊗ G en appelant l'une des fonctions SP, SP1, SP2. Si le nombre x = i mod n est nul (mod n étant la fonction modulo n), le dispositif DV1 génère aléatoirement un autre nombre k. Le dispositif DV1 calcule ensuite le nombre y grâce à l'équation suivante :

$$y = k^{-1}(H(m)+r \cdot x) \bmod n, \tag{5}$$

où H(m) est le résultat d'une fonction de hachage telle que SHA-1, appliquée au message m. Si le nombre y obtenu est nul, le dispositif DV1 recommence le calcul du nombre y en générant une autre valeur pour le nombre k. La signature est constituée par la paire (x, y).

Pour vérifier la signature (x,y), le dispositif DV1 vérifie tout d'abord que le point Q constituant la clé publique est différent du point à l'infini Ø, que ce point appartient à la courbe elliptique E(a,b), que le produit n ⊗ Q est égal au point à l'infini Ø et que x et y sont bien compris entre 1 et n-1. Il est à noter que la condition n ⊗ Q = Ø peut être vérifiée à l'aide des fonctions SP, SP1, SP2 car le mode de détection d'erreur n'est actif que pendant le traitement des bits du nombre scalaire inférieur au rang du bit de poids fort de l'ordre n du point de base G. Par conséquent, le traitement du dernier bit du nombre n peut (et doit) aboutir au point à l'infini Ø. Ensuite, le dispositif DV1 calcule les coordonnées du point P(i,j) grâce à l'équation suivante :

$$P(i,j) = [H(m) \cdot y^{-1} \bmod n] \otimes G \oplus [x \cdot y^{-1} \bmod n] \otimes Q \tag{6}$$

et vérifie que le nombre x est égal à i mod n.

L'une ou l'autre des procédures SP, SP1, SP2 peut être mise en oeuvre par exemple dans un algorithme génération de clé secrète tel que ECDH, ou de chiffrement/déchiffrement asymétrique tel que ECIES. Selon l'algorithme ECDH, une clé secrète peut être générée par deux personnes souhaitant échanger des messages chiffrés, de la manière suivante. Les deux personnes choisissent un point P sur une même courbe elliptique (choix d'un système cryptographique). Chaque personne choisit un nombre entier, respectivement DA, DB, à garder secret, calcule le produit DA ⊗ P, DB ⊗ P du point par le nombre scalaire qu'il a choisi, à l'aide d'une des fonctions SP, SP1, SP2, et envoie le produit obtenu à l'autre personne. Chaque personne peut ensuite calculer la clé secrète en multipliant le point reçu DA ⊗ P, DB ⊗ P par le nombre DB, DA qu'il a choisi. La clé secrète peut être choisie égale à la coordonnée affine x ou projective X du point DA ⊗ (DB ⊗ P) qui est égal au point DB ⊗ (DA ⊗ P), ainsi obtenu par chacune des parties.

Selon l'algorithme ECIES, une paire de clés privée et publique (r, Q) peut être générée comme dans l'algorithme ECDSA. Pour chiffrer un message m, le dispositif DV1 génère aléatoirement un nombre u entre 1 et n-1, et calcule les points R = u ⊗ G et P(x,y) = u ⊗ Q, Q étant la clé publique du destinataire du message chiffré. Le point R constitue la clé publique de l'émetteur du message. Le point P doit être différent du point à l'infini Ø. Le dispositif DV1 met en oeuvre une fonction de dérivation de clé KDF pour générer des clés symétriques Ke, Km, telles que (Ke, Km) = KDF(x,S1), S1 étant une donnée partagée avec le destinataire du message chiffré. Ensuite, le dispositif DV1 chiffre le message m en mettant en oeuvre un algorithme de chiffrement symétrique E utilisant la clé Ke. Le dispositif DV1 calcule ensuite une donnée d en appliquant une fonction de hachage à la clé Km et à une autre donnée S2 partagée avec le destinataire du message. Le dispositif DV1 transmet le résultat c du chiffrement du message m au destinataire du message, avec la donnée d et éventuellement le point R constituant la clé publique de l'émetteur du message.

Pour déchiffrer un message chiffré (c,d), le dispositif DV1 calcule le point P(x,y) = u ⊗ R (= r ⊗ Q). Le point P obtenu doit être différent du point à l'infini 0. Le dispositif DV1 utilise la même fonction de dérivation de clé KDM et la donnée partagée S1, pour générer les clés symétriques Ke, Km, que l'émetteur du message. Le dispositif DV1 calcule ensuite le nombre d1 en utilisant la même formule que l'émetteur du message, appliquée à la clé Km et à la donnée partagée S2 pour calculer un nombre d1. Si le nombre d1 obtenu est identique au nombre d reçu, le message peut être déchiffré en appliquant à la donnée chiffrée c reçue, la fonction de déchiffrement symétrique correspondant à la fonction de chiffrement utilisée, à l'aide de la clé Ke.

Il apparaîtra clairement à l'homme de l'art que la présente invention est susceptible de diverses variantes de réalisation et diverses applications. En particulier, l'invention n'est pas limitée aux algorithmes de multiplication d'un point par un nombre scalaire, présentés dans les figures 2, 6 et 7, mais peut s'appliquer à des algorithmes dans lesquels plusieurs bits du nombre scalaire sont traités à chaque itération. Ainsi, l'algorithme A1 présenté en Annexe I est dérivé de l'algorithme présenté sur la figure 6 (sans la gestion des drapeaux EDS et ED), en appliquant une fenêtre glissante de deux bits, c'est-à-dire en traitant deux bits du nombre scalaire k à chaque itération. Le nombre d'itérations à effectuer est donc divisé par deux, en utilisant un ensemble R[] de trois registres au lieu d'un seul registre. Chaque itération d'indice i comporte quatre étapes 2.1 à 2.4. L'étape 2.1 consiste à calculer un nombre entier u en combinant deux bits consécutifs $k_{2i}$ et $k_{2i+1}$ de rangs 2i et 2i+1 du nombre scalaire k. Les étapes 2.2 et 2.3 consistent à effectuer un doublement du point P à multiplier par le nombre scalaire, chargé dans le registre D. L'étape 2.4 qui est exécutée si le nombre u est non nul, consiste à additionner le point D et le point dans le registre R[u]. Lorsque toutes les itérations ont été effectuées, le résultat de la multiplication scalaire est obtenu par la combinaison des valeurs des registres R[1] $\oplus$ 2$\otimes$R[2] $\oplus$ 3$\otimes$R[3].

L'algorithme A2 présenté en Annexe I est une généralisation de l'algorithme A1 à une fenêtre glissante de m bits, c'est-à-dire en traitant m bits $k_i$ du nombre scalaire k à chaque itération. L'application d'une telle fenêtre glissante permet ainsi de réduire le nombre d'itérations à un nombre égal au nombre de bits du nombre scalaire divisé par m. Cependant cette diminution est réalisée au détriment du nombre d'opérations d'addition et de doublement devant être effectuées (à l'étape 4) pour obtenir le résultat final, ce nombre d'opérations augmentant d'une manière exponentielle (en $2^m$). Les étapes 1 et 2 permettent d'initialiser un registre D à la valeur du point P à multiplier par le nombre scalaire k, et initialiser $2^m$-1 registres R[j] à la valeur du point à l'infini. Chaque itération comprend une boucle de calcul (étapes 3.1, 3.1.1) d'un nombre u calculé à partir des bits du nombre scalaire à traiter lors de l'itération, une boucle de calcul (3.1.2) pour doubler m fois le point mémorisé dans le registre D, et une opération d'addition pour ajouter le point dans le registre D au point dans le registre R[u].

Par ailleurs, d'autres modèles projectifs peuvent être mis en oeuvre sans sortir du cadre de l'invention telle que définie par les revendications annexées. Ainsi, l'invention peut être mise en oeuvre avec :

- le modèle projectif jacobien modifié utilisant le système de coordonnées (X=x·$Z^2$, Y=y·$Z^3$, Z, T=a·$Z^4$), a étant l'un des paramètres (a,b) de la courbe elliptique,
- le modèle projectif W12 utilisant le système de coordonnées (X=x·Z, Y=y·0$Z^2$, Z),
- le modèle projectif XYZZ utilisant le système de coordonnées (X=x·ZZ, Y=y·ZZZ, ZZ, ZZZ), avec $ZZ^3$=$ZZZ^2$, ou encore
- le modèle projectif XZ utilisant le système de coordonnées (X=x·Z, Z).

ANNEXE I (Faisant partie intégrante de la description)

**Algorithme A1 - Multiplication par un scalaire "Double & Add Only"**

**Entrée :**

*un point P appartenant à la courbe elliptique E sur le corps de Galois*
*un scalaire k entier de v bits tel que k = ($k_{v-1}$ $k_{v-2}$.... $k_0$)$_2$*

**Requiert :**

un ensemble R de *trois registres de la taille du point P*
*un registre D de la taille du point P*

***Sortie :*** *k $\otimes$ P*

**Étape 1 :** R[1] = Ø ; R[2] = Ø ; R[3] = Ø ; D = P

**Étape 2 :** pour i allant de 0 à $\left\lceil \dfrac{v}{2} \right\rceil$-1, faire :

    **Étape 2.1 :** u = $k_{2i}$ + 2$k_{2i+i}$
    **Étape 2.2 :** D = 2 $\otimes$ D (DBL)
    **Étape 2.3 :** D = 2 $\otimes$ D (DBL)
    **Étape 2.4 :** si u $\geq$ 1 alors R[u] = R[u] $\oplus$ D (ADD)

**Etape 3** : R[1] = R[1] $\oplus$ R[3] $\oplus$ 2$\otimes$(R[2] $\oplus$ R[3]) (ADD, DBL)
**Étape 4 :** Retourner R[1]
$\lceil x \rceil$ représentant le plus petit nombre entier supérieur ou égal à x

**Algorithme A2 - Multiplication par un scalaire "Double & Add Only"**

**Entrée :**

un point P appartenant à la courbe elliptique E sur le corps de Galois
un scalaire k entier de v bits tel que $k = (k_{v-1} \, k_{v-2}\ldots k_0)_2$

**Requiert :**

un ensemble R de $2^m$-1 *registres de la taille du point P (m>2)*

un ensemble de $\left| \dfrac{v}{m} \right|$ *registres DP de la taille du point P tels que DP[i]=$[2^{m \cdot j}]$·P, pour*

$$0 \le i < \left| \frac{v}{m} \right|$$

**Sortie :** $k \otimes P$

**Etape 1 :** D = P

**Étape 2 :** pour j allant de 1 à $2^m$-1, faire R[j] = Ø

**Étape 3 :** pour i allant de 0 à $\left| \dfrac{v}{m} \right|$-1, faire :

    **Etape 3.1 :** pour j allant de 0 à m-1, faire :

        **Etape 3.1.1 :** u = $2^j$. $k_{m.i+j}$ (avec ki = 0 si i > v-1)
        **Etape 3.1.2 :** D = 2 $\otimes$ D (DBL)

    **Étape 3.2 :** si u $\ge$ 1 alors R[u] = R[u] $\oplus$ D (ADD)

**Etape 4 :** R[1] = $\displaystyle\bigoplus_{j=1}^{2^m-1}$ j $\otimes$ R[j] (ADD,DBL)

**Étape 5 :** Retourner R[1] $\bigoplus$ représente l'opérateur d'addition de points dans le groupe de points de la courbe elliptique, à coordonnées dans le corps de Galois.

**Revendications**

1. Procédé de calcul cryptographique dans un système cryptographique sur courbe elliptique, le procédé étant exécuté par un dispositif électronique (DV1) et comprenant une opération de multiplication (SP, SP1, SP2) d'un point (P) d'une courbe elliptique par un nombre scalaire (k), le point présentant des coordonnées affines (x,y) appartenant à un corps de Galois,
**caractérisé en ce qu'**il comprend des étapes consistant à :

    détecter l'apparition d'un point à l'infini (Ø) durant des calculs intermédiaires (ADD, DBL) de l'opération de multiplication, et
    activer un signal d'erreur (ER=T) si le point à l'infini est détecté et si le nombre de bits (s, v-s) du nombre scalaire traités par l'opération de multiplication est inférieur au rang du bit de poids fort d'un ordre (n) d'un point de base (G) du système cryptographique.

2. Procédé selon la revendication 1, comprenant une étape d'activation du signal d'erreur (ER=T) si le point à l'infini (Ø) a été détecté en entrée d'un calcul intermédiaire (ADD, DBL) de l'opération de multiplication (SP, SP1, SP2), si une opération d'addition (ADD) et/ou de doublement (DBL) de point a été exécutée, et si le nombre de bits (s, v-s) traités du nombre scalaire (k) est inférieur au rang du bit de poids fort de l'ordre (n) du point de base (G).

3. Procédé selon la revendication 1 ou 2, dans lequel le calcul intermédiaire comprend une addition (ADD) de points (Q1, Q2) de la courbe elliptique.

4. Procédé selon l'une des revendications 1 à 3, dans lequel le calcul intermédiaire comprend une opération de doublement (DBL) d'un point (Q) de la courbe elliptique.

5. Procédé selon l'une des revendications 1 à 4, comprenant des étapes d'activation d'un mode de détection d'erreur (ED=T) seulement lorsque le nombre de bits (s) traités du nombre scalaire (k) est inférieur au rang du bit de poids fort de l'ordre (n) du point de base (G), le signal d'erreur (ER) ne pouvant être activé que lorsque le mode de détection d'erreur est activé.

6. Procédé selon l'une des revendications 1 à 5, comprenant une étape de détection de l'apparition du point à l'infini (Ø) avant et/ou après une opération d'addition de points (Q1 ⊕ Q2), et/ou avant et/ou après une opération de doublement de point (2 ⊗ Q).

7. Procédé selon l'une des revendications 1 à 6, comprenant une étape d'utilisation en tant que point (R) résultant du calcul intermédiaire, d'un point ayant une valeur arbitraire, lorsque le signal d'erreur (ER) est actif.

8. Procédé selon l'une des revendications 1 à 7, comprenant une étape d'attribution d'une valeur arbitraire au nombre scalaire, lorsque le signal d'erreur (ER) est actif.

9. Dispositif électronique (DV1) comprenant un processeur (PRC) configuré pour la mise en oeuvre du procédé selon l'une des revendications 1 à 8.

10. Dispositif selon la revendication 9, comprenant un bloc de calcul d'addition (AD1) de points d'une courbe elliptique et un bloc de calcul de doublement (DB1) d'un point de la courbe elliptique.

11. Dispositif selon la revendication 10, dans lequel le bloc de calcul d'addition (AD1) et/ou le bloc de calcul de doublement (DB1) sont configurés pour détecter l'apparition du point à l'infini (Ø), et pour activer un signal d'erreur (ER) si un mode de détection d'erreur est activé (ED = T).

12. Dispositif selon la revendication 10, configuré pour détecter l'apparition du point à l'infini (Ø) et pour activer un signal d'erreur (ER=T), si un mode de détection d'erreur est activé (ED = T), avant et/ou après l'activation du bloc de calcul d'addition (AD1) pour effectuer une opération d'addition, et/ou avant et/ou après l'activation du bloc de calcul de doublement (DB1) pour effectuer une opération de doublement.

**Patentansprüche**

1. Verfahren zur kryptographischen Berechnung in einem kryptographischen System auf einer elliptischen Kurve, wobei das Verfahren durch eine elektronische Vorrichtung (DV1) ausgeführt wird und eine Multiplikationsoperation (SP, SP1, SP2) zum Multiplizieren eines Punktes (P) einer elliptischen Kurve mit einer skalaren Zahl (k) umfasst, wobei der Punkt affine Koordinaten (x,y) aufweist, die einem Galois-Körper gehören, **dadurch gekennzeichnet, dass** es Schritte umfasst, die darin bestehen:

das Auftreten eines unendlich fernen Punktes (Ø) während Zwischenberechnungen (ADD, DBL) der Multiplikationsoperation zu erkennen, und
ein Fehlersignal (ER=T) zu aktivieren, wenn der unendlich ferne Punkt erkannt wird und wenn die Anzahl (s, v-s) von Bits der skalaren Zahl, die durch die Multiplikationsoperation verarbeitet werden, kleiner ist als der Rang des höchstwertigen Bits einer Ordnung (n) eines Basispunktes (G) des kryptographischen Systems.

2. Verfahren nach Anspruch 1, umfassend einen Schritt der Aktivierung des Fehlersignals (ER=T), wenn der unendlich ferne Punkt (0) am Eingang einer Zwischenberechnung (ADD, DBL) der Multiplikationsoperation (SP, SP1, SP2) erkannt wurde, wenn eine Punktadditions- (ADD) und/oder Punktverdoppelungsoperation (DBL) durchgeführt wurde, und wenn die Anzahl (s, v-s) von verarbeiteten Bits der skalaren Zahl (k) kleiner ist als der Rang des höchstwertigen Bits der Ordnung (n) des Basispunktes (G).

**3.** Verfahren nach Anspruch 1 oder 2, bei dem die Zwischenberechnung eine Additionsoperation (ADD) zum Addieren von Punkten (Q1, Q2) der elliptischen Kurve umfasst.

**4.** Verfahren nach einem der Ansprüche 1 bis 3, bei dem die Zwischenberechnung eine Verdoppelungsoperation (DBL) zum Verdoppeln eines Punktes (Q) der elliptischen Kurve umfasst.

**5.** Verfahren nach einem der Ansprüche 1 bis 4, umfassend Schritte, die darin bestehen, einen Fehlererkennungsmodus (ED=T) nur dann zu aktivieren, wenn die Anzahl (s) von verarbeiteten Bits der skalaren Zahl (k) kleiner ist als der Rang des höchstwertigen Bits der Ordnung (n) des Basispunktes (G), wobei das Fehlersignal (ER) nur dann aktiviert werden kann, wenn der Fehlererkennungsmodus aktiviert ist.

**6.** Verfahren nach einem der Ansprüche 1 bis 5, umfassend einen Schritt, der darin besteht, das Auftreten des unendlich fernen Punktes (Ø) vor und/oder nach einer Punktadditionsoperation (Q1 ⊕ Q2), und/oder vor und/oder nach einer Punktverdoppelungsoperation (2 ⊗ Q) zu erkennen.

**7.** Verfahren nach einem der Ansprüche 1 bis 6, umfassend einen Schritt, der darin besteht, einen einen beliebigen Wert aufweisenden Punkt als aus der Zwischenberechnung resultierenden Punkt (R) zu verwenden, wenn das Fehlersignal (ER) aktiv ist.

**8.** Verfahren nach einem der Ansprüche 1 bis 7, umfassend einen Schritt, der darin besteht, der skalaren Zahl einen beliebigen Wert zuzuweisen, wenn das Fehlersignal (ER) aktiv ist.

**9.** Elektronische Vorrichtung (DV1) umfassend einen Prozessor (PRC), der konfiguriert ist, um das Verfahren nach einem der Ansprüche 1 bis 8 auszuführen.

**10.** Vorrichtung nach Anspruch 9, umfassend einen Additionsberechnungsblock (AD1) zum Addieren von Punkten einer elliptischen Kurve und einen Verdoppelungsberechnungsblock (DB1) zum Verdoppeln eines Punktes der elliptischen Kurve.

**11.** Vorrichtung nach Anspruch 10, bei der der Additionsberechnungsblock (AD1) und/oder der Verdoppelungsberechnungsblock (DB1) konfiguriert sind, um das Auftreten des unendlich fernen Punktes (Ø) zu erkennen, und ein Fehlersignal (ER) zu aktivieren, wenn ein Fehlererkennungsmodus aktiviert ist (ED = T).

**12.** Vorrichtung nach Anspruch 10, die konfiguriert ist, um das Auftreten des unendlich fernen Punktes (Ø) zu erkennen und ein Fehlersignal (ER=T) zu aktivieren, wenn ein Fehlererkennungsmodus aktiviert ist (ED = T), und zwar vor und/oder nach dem Aktivieren des Additionsberechnungsblocks (AD1), um eine Additionsoperation durchzuführen, und/oder vor und/oder nach dem Aktivieren des Verdoppelungsberechnungsblocks (DB1), um eine Verdoppelungsoperation durchzuführen.

**Claims**

**1.** A cryptographic calculation method in an elliptic curve cryptographic system, the method being executed by an electronic device (DV1) and comprising a multiplication operation (SP, SP1, SP2) of multiplying a point (P) of an elliptic curve by a scalar number (k), the point having affine coordinates (x,y) belonging to a Galois field, **characterized in that** it comprises steps of:

> detecting the appearance of a point at infinity (Ø) during intermediate calculations (ADD, DBL) of the multiplication operation, and
> activating an error signal (ER=T) if the point at infinity is detected and if the number of bits (s, v-s) of the scalar number processed by the multiplication operation is lower than the rank of the most significant bit of an order (n) of a base point (G) of the cryptographic system.

**2.** Method according to claim 1, comprising a step of activating the error signal (ER=T) if the point at infinity (Ø) has been detected at input of an intermediate calculation (ADD, DBL) of the multiplication operation (SP, SP1, SP2), if an adding (ADD) and/or doubling (DBL) operation of adding and/or doubling a point has been executed, and if the number of processed bits (s, v-s) of the scalar number (k) is lower than the rank of the most significant bit of the order (n) of the base point (G).

3.  Method according to claim 1 or 2, wherein the intermediate calculation comprises an addition (ADD) of points (Q1, Q2) of the elliptic curve.

4.  Method according to one of claims 1 to 3, wherein the intermediate calculation comprises an operation of doubling (DBL) a point (Q) of the elliptic curve.

5.  Method according to one of claims 1 to 4, comprising steps of activating an error detection mode (ED=T) only when the number of processed bits (s) of the scalar number (k) is lower than the rank of the most significant bit of the order (n) of the base point (G), wherein the error signal (ER) can only be activated when the error detection mode is activated.

6.  Method according to one of claims 1 to 5, comprising a step of detecting the appearance of the point at infinity (Ø) before and/or after an operation of adding points (Q1 ⊕ Q2), and/or before and/or after an operation of doubling a point (2 ⊗ Q).

7.  Method according to one of claims 1 to 6, comprising a step of using as point (R) resulting from the intermediate calculation, a point having an arbitrary value, when the error signal (ER) is active.

8.  Method according to one of claims 1 to 7, comprising a step of allocating an arbitrary value to the scalar number, when the error signal (ER) is active.

9.  An electronic device (DV1) comprising a processor (PRC) configured to implement the method according to one of claims 1 to 8.

10. Device according to claim 9, comprising an adding calculation block (AD1) for calculating the addition of points of an elliptic curve and a doubling calculation block (DB1) for calculating the doubling of a point of the elliptic curve.

11. Device according to claim 10, wherein the adding calculation block (AD1) and/or the doubling calculation block (DB1) are configured to detect the appearance of the point at infinity (Ø), and to activate an error signal (ER) if an error detection mode is activated (ED = T).

12. Device according to claim 10, configured to detect the appearance of the point at infinity (Ø) and to activate an error signal (ER=T), if an error detection mode is activated (ED = T), before and/or after the adding calculation block (AD1) is activated to perform an adding operation, and/or before and/or after the doubling calculation block (DB1) is activated to perform a doubling operation.

Fig. 1

Fig. 2

Fig. 3

Fig. 4

Fig. 5

SP1(k,P)

S61 — $R0 = \emptyset$ ; $R1 = P$
$s = 0$ ; $EDS = F$

S62 — $s < \lfloor Log_2(n) \rfloor$ & $EDS = T$ ? → Y

N

S64 — $ED = F$     S63 — $ED = T$

S66 — $R0 = ADD(R0,R1)$ ← Y — $k_s = 1$ ? ← S65

N

S70   S67 — $EDS = T$   S68 — $R1 = DBL(R1)$

$s = s+1$ ← Y — $s < v-1$ ? ~ S69

N

Ret. R1 — S71

Fig. 6

SP2(k,P)

S81 — $R[0] = \emptyset$ ; $R[1] = P$
$s = v-1$ ; $EDS = F$

S82 — $v-s < \lfloor Log_2(n) \rfloor$ & $EDS = T$ ?

Y

S84 — $ED = T$     S83 — $ED = F$

$b = k_s$ — S85

S86 — $R[1-b] = ADD(R[0],R[1])$

S87 — $R[b] = DBL(R[b])$

S89 — $EDS = T$ ← Y — $b = 1$ ? — S88

N

$s > 0$ ? — S90   Y → $s = s-1$   S91

N

Ret. R[0] — S92

Fig. 7